# FASCICULE DE BREVET EUROPEEN

(11) **EP 0 860 782 B1**
(45) Date de publication et mention de la délivrance du brevet: **02.05.2003**
(21) Numéro de dépôt: 98400332.7
(22) Date de dépôt: 12.02.1998
(51) Int. Cl.: G06F 13/40

(54) **Procédé d'initialisation d'une liaison série entre deux circuits intégrés comportant un port parallèle série et dispositif de mise en oeuvre du procédé**
Initialisierungsverfahren einer seriellen Verbindung zwischen zwei integrierten Schaltungen mit einer parallelen zu seriellen Schnittstelle und Anordnung zur Durchführung des Verfahrens
Method of initialisation of a serial link between two integrated circuits having a parallel/serial port and device using such method

(30) Priorité: 19.02.1997 FR 9701944; 19.02.1997 FR 9701945; 13.03.1997 FR 9702974
(43) Date de publication de la demande: 26.08.1998
(73) Titulaire: BULL S.A., 78434 Louveciennes Cedex (FR)
(72) Inventeur: Autechaud, Jean-François, 75004 Paris (FR); Dionet, Christophe, 94200 Ivry sur Seine (FR)
(74) Mandataire: Debay, Yves

(56) Documents cités:
- US-A- 4 577 317
- US-A- 5 522 088
- US-A- 5 544 319

## Description

La présente invention concerne un procédé d'initialisation d'une liaison série entre deux circuits intégrés comportant un port parallèle série et série parallèle, le dispositif permettant la mise en oeuvre du procédé.

Il est connu dans l'art antérieur, par le brevet US 5 522 088, un procédé et un dispositif pour transmettre des données avec un taux élevé de transmission sur un réseau de communication partagé par l'intermédiaire d'un bus parallèle. Le principe du dispositif est d'utiliser une interface auto-synchronisée (self-timed) possédant une horloge indépendante de l'horloge d'un processeur, pour connecter les ports de chaque processeur. La transmission de données entre deux processeurs comprend une étape d'alignement ou de synchronisation automatique. Cette étape de synchronisation automatique comprend trois parties. La première partie (bit synchronisation) consiste à établir la synchronisation des bits de données en effectuant tout d'abord une remise à zéro logique de l'interface (complète logic reset). Cette opération s'effectue au niveau de la liaison et non au niveau du ou des ports des processeurs eux-mêmes. Cette étape de synchronisation correspond en fait à l'établissement de la liaison série entre les deux processeurs, c'est-à-dire à l'initialisation de la liaison. Or, il est clair qu'à ce stade les ports de chaque processeur sont déjà prêts et qu'il n'y a pas eu d'initialisation de ces ports. Un objet de la présente invention est de permettre une réinitialisation du port d'entrée-sortie entre un bus parallèle et une liaison série. Cette réinitialisation permet de remédier notamment au problème du bruit existant sur la liaison qui peut générer des erreurs, même lorsque le calibrage des deux ports est exact.

Un premier but est atteint par le procédé selon la revendication 1. D'autres particularités du procédé sont définies par les revendications 2 à 11.

Un autre but de l'invention est un dispositif permettant la mise en oeuvre du procédé.

Ce deuxième but est atteint par le dispositif selon la revendication 12. D'autres particularités de ce dispositif sont définies par les revendications 13 à 21.

D'autres particularités et avantages de la présente invention apparaîtront plus clairement à la lecture de la description ci-après faite en référence aux dessins annexés illustratifs d'un mode non limitatif de réalisation de l'invention dans lesquels :
la figure 1A représente la partie du circuit intégré constituant le port d'interface série parallèle ;
la figure 1B représente une vue de détail de la cellule de circuit intégré constituant le sérialiseur / désérialiseur ;
la figure 2A représente un exemple d'application du port d'entrée sortie série parallèle de la figure 1.
la figure 2B représente le schéma d'architecture d'une machine utilisant un tel circuit intégré ;
la figure 3A représente les différentes étapes de la procédure d'initialisation d'un lien série entre deux ports appartenant à des cartes différentes ;
la figure 3B est une autre représentation de la procédure d'initialisation entre deux ports ;
la figure 3C représente la constitution d'un message envoyé sur le lien série ;
la figure 3D représente le logigramme de gestion des trames ;
la figure 4A représente un circuit de substitution de caractères d'erreurs ;
la figure 4B représente un circuit d'historique.

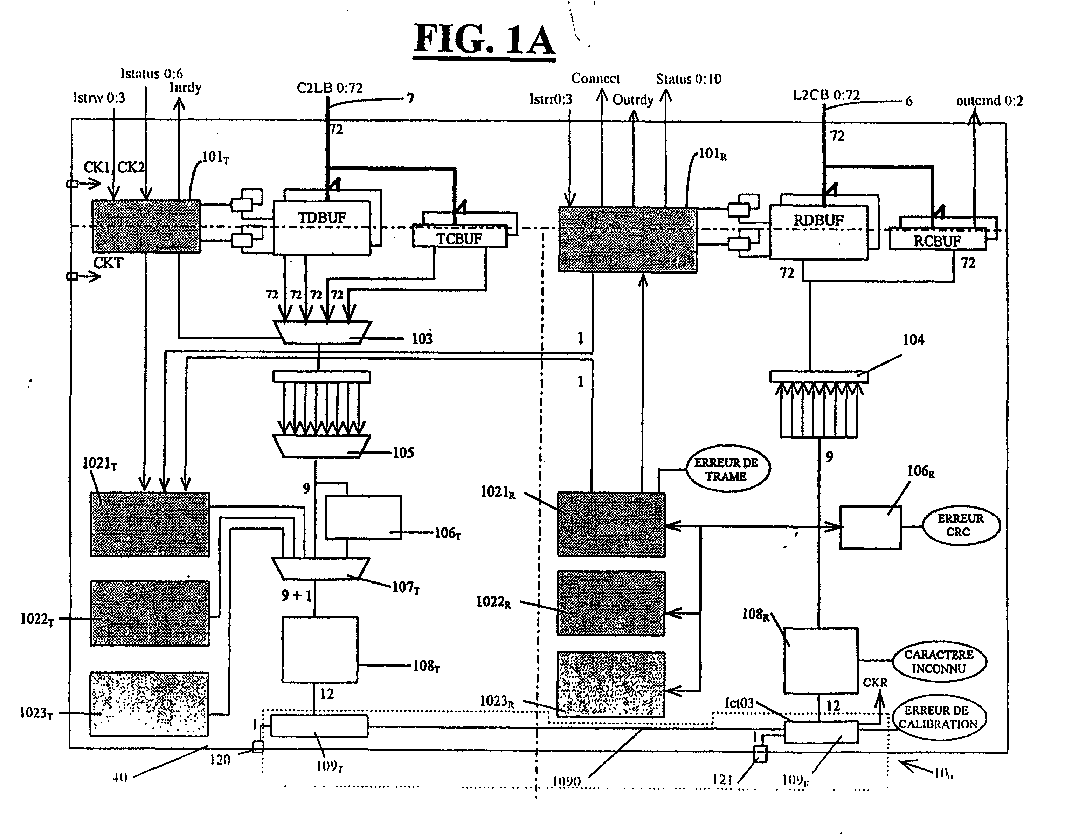

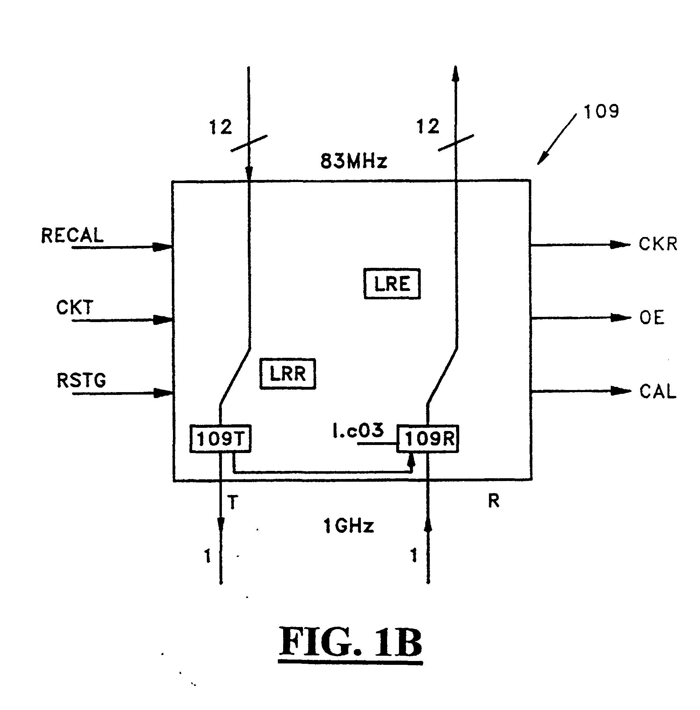

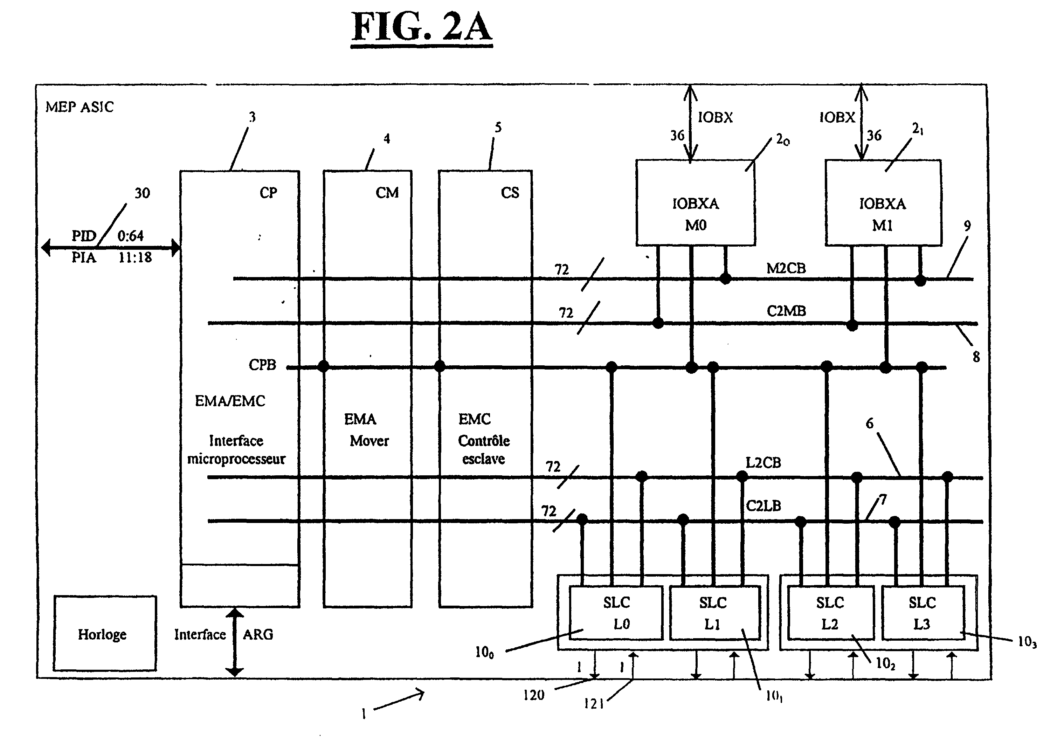

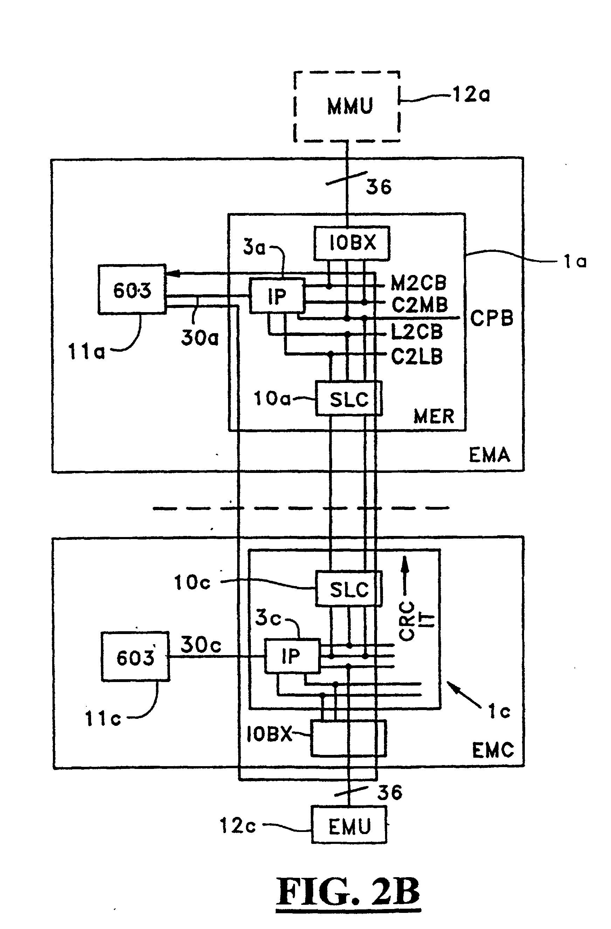

Le port 10₀ appelé bloc de contrôle de la liaison série SLC (Serial Link Control) est incorporé dans un circuit intégré du type de celui par exemple représenté à la figure 2A. Ce circuit intégré (1) comporte une pluralité de port 10⁰, 10¹, 10², 10³ du même type que celui de la figure 1, lesquels communiquent à une fréquence système par exemple de 33 MHz, avec deux bus parallèles de données de 72 bits, L2CB en entrée (6) et C2LB en sortie (7). Ces bus parallèles communiquent avec des circuits logiques réalisant pour le circuit (3) une fonctionnalité d'interface avec un microprocesseur (11) par l'intermédiaire d'un bus 64 bits (30), pour le circuit (4) une fonctionnalité de déplacement (MOVER) pour le circuit intégré lorsque celui-ci est incorporé dans une carte de type données, et pour le circuit (5) une fonctionnalité de contrôleur mémoire (Slave Control). Ces circuits (3, 4, 5) communiquent également par deux bus de données de 72 bits M2CB (9), C2MB (8), avec deux interfaces d'entrée sortie IOBX 2⁰, 2¹, qui permettent la communication avec des bus 36 bits provenant soit d'une mémoire (12a, fig. 2B) principale MMU, soit d'une mémoire (12c) d'extension EMU comme représenté à la figure 2B. Un bus de commande CPB permet au microprocesseur (11) communiquant avec le circuit intégré (1) d'accéder aux registres de contrôle et de statut (Status) des différents circuits (3, 4, 5, 2, 10) présent dans le circuit intégré. Ce circuit intégré (1) est utilisé dans une machine comportant une mémoire principale (12a), une mémoire étendue partageable par plusieurs systèmes (12c). Un premier circuit intégré (1a) maître selon l'invention communique par le bus (30a) avec un premier processeur (11a) et par l'interface IOBX avec la mémoire (12a), tandis qu'un deuxième circuit intégré (1c) esclave communique d'une part, avec le premier circuit maître (1a), et d'autre part par le bus (30c) avec un deuxième processeur (11c) et avec une mémoire étendue (12c); Fig.1A. Le port (10a) de transmission parallèle série et de réception série parallèle du circuit (1a), comporte pour la partie transmission une paire de tampons de données (buffers) TDBUF de 8 x 72 bits reliés au bus de transmission C2LB. Un multiplexeur (103) permet de sélectionner l'un des deux tampons (buffers) TDBUF ou le tampon (buffer) TCBUF de signaux de commande qui contient l'en-tête. Les informations sortant du multiplexeur (103) sont envoyées sur un circuit (105) de désassemblage, lequel génère une succession de 9 bits série constituant les caractères à transmettre. Ce circuit de désassemblage (105) est également relié à un circuit de génération de caractère de contrôle cyclique redondant CRC (106_{T}). Un second multiplexeur (107) permet de sélectionner les signaux transmis à un codeur (108_{T}) permettant le codage 9/12 des informations transmises en associant au caractère normal formé d'un nonet, un bit de contrôle et, en complétant à 12 bits par un bit de start et un bit de stop. Le codage 9/12 est effectué pour que le signal transmis sur la ligne série ne comporte pas de composantes continue (DC Balance). Le multiplexeur (107) reçoit des signaux provenant d'une machine (1021T) d'état de transmission du lien série qui contient au moins un compteur à 2 bits de jetons, dont chaque bit représentant un jeton indique la disponibilité du tampon associé. Le multiplexeur (107) reçoit des signaux provenant d'une machine d'état de substitution (1022_{T}), et des signaux provenant d'une machine d'état d'initialisation du port (1023_{T}). La sortie du codeur (108_{T}) est reliée à un circuit sérialiseur (109_{T}) dont la sortie constitue une ligne série (120) qui émet des signaux à une vitesse de 1 Giga bits/sec.

Le sérialiseur est relié par une liaison série de rebouclage (1090) à un désérialiseur (109_{R}) du circuit de réception du port (10a). Cette liaison (1090) est validée sur le désérialiseur (109_{R}) par un signal (Ict03).

Chaque cellule (109) de sérialisation (109_{T}) / désérialisation (109_{R}) représentée à la figure 1b, comporte trois entrées, une première constituée par le signal CKT d'horloge de transmission provenant des autres parties du circuit intégré (1).

Une seconde entrée est constituée du signal RSTG de réinitialisation générale qui est envoyé au circuit intégré (1) au moyen du bus de commande (non représenté) du circuit intégré (1) par le microprocesseur (11a) associé avec le circuit intégré (1) comme représenté à la figure 2b.

Une troisième entrée est constituée par le signal RECAL de redémarrage de la calibration d'horloge de réception pour la cellule.

Une quatrième entrée, OE (Output Enable) de validation des sorties.

Cette cellule (109) comporte deux lignes à retard, une ligne à retard d'émission (LRE), une ligne à retard de réception (LRR). La cellule (109) génère deux signaux, un premier CKR d'horloge de réception, et un deuxième CAL indiquant la calibration de celle-ci (CKR).

Les lignes à retard (LRE, LRR) du circuit sont utilisées par ce dernier lorsque la ligne de réception reçoit des signaux d'attente (messages neutres / caractères nuls) constitués de 6 bits à 1, et de 6 bits à 0 pour, en faisant varier sa ligne (LRE) à retard respectivement (LRR), calibrer l'horloge (CKT respectivement CKR). Ainsi l'horloge de transmission (CKT) est calée sur une valeur de 12 nano-secondes qui correspond à une fréquence de 83 Méga Hertz, c'est-à-dire celle de l'émission d'un caractère de 12 bits, de façon à permettre l'échantillonnage correct des informations reçues sur la ligne de transmission à 12 bits. La ligne à retard de réception (LRR) permet le calibrage de l'horloge de réception CKR à 83 MHz (1000/12) en faisant varier la ligne à retard. La variation de la ligne à retard s'effectue à l'aide d'un mécanisme DLL (Delay Lock Loop) qui permet d'effectuer le calibrage et qui permet d'adapter ce calibrage aux petites évolutions du signal de réception et de transmission lorsque l'horloge de réception a pu se calibrer sur les signaux idle (messages neutres /-caractères nuls,), la cellule fait monter la sortie (CAL) au niveau actif.

Le multiplexeur (107) reçoit également les signaux d'une machine d'état de la transmission. Chaque tampon (buffer) de transmission est contrôlé par une machine d'état de gestion des tampons (buffers) de transmission (101_{T}) laquelle reçoit Istatus 0 : 6, Istrw 0 : 3, et émet le signal Inrdy.

Le désérialiseur (109_{R}) est relié à un décodeur (108_{R}) fonctionnant sur le même principe que le codeur (108_{T}) du circuit de transmission. Ce décodeur du circuit de réception envoie les 9 bits de chaque donnée sur un circuit (104) d'assemblage des données, pour transformer en mots de 8 x 72 bits les données reçues en série, qui sont chargées dans une paire de tampons (buffers) de réception de données (RDBUF) fonctionnant à une fréquence de 83 MHz. Cette paire de tampons (buffers) de réception de données (RDBUF) est contrôlée par une machine de gestion des tampons (buffers) de réception (101_{R}), et est associée à une paire de tampons de réception de commande (RCBUF) qui contiennent les en-têtes des messages. La sortie du décodeur (108_{R}) du circuit de réception est branchée à un circuit de code de vérification de messages élaborant un caractère de contrôle cyclique CRC (106_{R}) pour comparaison. Le CRC_{N+1} est mis à jour après chaque réception de 9 bits de données en calculant sur 16 bits le CRC par un algorithme de permutation cyclique. Les informations transmises par ce décodeur (108_{R}) sont également transmises d'une part, à une machine d'état constituant un tampon (buffer) d'historique (1022_{R}), et d'autre part, à une machine d'état du port de réception (1021_{R}), et enfin à une machine d'état d'initialisation (1023_{R}) du port.

La machine (101_{R}) d'état de gestion du tampon (buffer) de réception émet trois signaux (Connect, Outrdy, Status 0 : 10), et reçoit en entrée sur trois lignes les informations (Istrr 0 : 3).

Le signal (Outrdy) indique que la sortie est prête, ce signal indique qu'il y a un message complet en attente de lecture. Le signal Status indique le statut des sorties : interruptions ou non, opérations invisibles ou non, accès mémoire/registres d'accès, local/éloigné ou non ISCON, source micro/déplacement (MOVER) - esclaves (SLAVE), réponses différées ou non, dernier message ou non, erreur de données ou non, accès hors mémoire ou non, message insignifiant ou non. La sortie Connect indique que le port SLC (10⁰) est déconnecté quand cette sortie est désactivée.

Les entrées Istrr permettent la lecture des ports de réception en ordre FIFO, et la commande qui lit le dernier double mot d'un message engendre la génération d'un caractère de contrôle de flux (jeton) associé avec le tampon (buffer) qui devient ainsi libre. Ce caractère de contrôle de flux est transmis de la machine d'état de gestion des tampons (buffers) de réception (101_{R}) à la machine d'état de gestion de la transmission, et à travers celle-ci au multiplexeur (107) de façon à transmettre cette information au port (10c) d'entrée de la carte (1c) associée dans la liaison série au port (109_{R}) de réception dont on vient de lire les tampons (buffers) de réception RDBUF. La machine d'état de gestion des tampons (buffers) de transmission (101_{T}) comporte deux entrées Istatus et Istrw, et une sortie Inrdy. Cette sortie Inrdy indique qu'il y a un tampon (buffer) de transmission TDBUF libre en attente pour être écrit. Les lignes Istatus permettent de préciser les types de message à écrire, et de déterminer en fonction de la valeur des deux premiers bits de status les significations suivantes : 00 ne sont plus utilisés, 01 il s'agit seulement de données, 10 il s'agit d'un entête (header), 11 il s'agit d'un entête et de données. Le troisième bit Istatus, indique s'il s'agit du dernier message ou non. Le quatrième bit, qu'il s'agit d'une erreur de données ou non ; et le cinquième bit si on a un accès extérieur à la mémoire ou non.

Enfin le signal Istrw permet d'écrire les tampons (buffers) de transmissions (TDBUF) en ordre FIFO. Le signal Istrw qui écrit le dernier double mot d'un message initialise la transmission du message dès qu'un tampon (buffer) de réception (RDBUF) éloigné (par exemple du port 10c) est déclaré libre par un port de réception (109_{R}) relié à la liaison série (120).

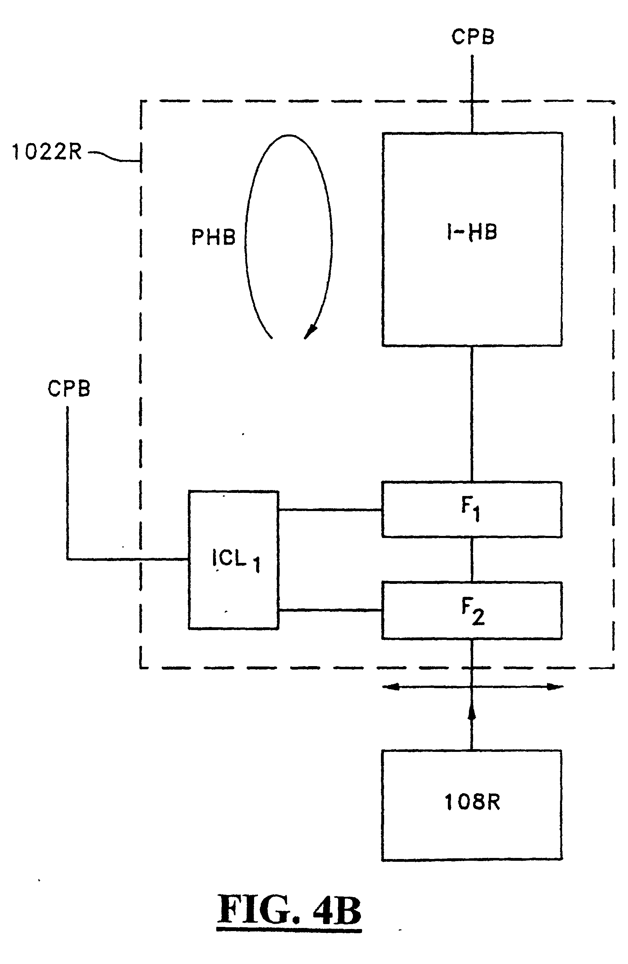

Le tampon (buffer) d'historique (I-HB) a 16 entrées (Fig.4B) et contient soit les derniers 16 caractères qui viennent de la liaison série par le décodeur (108R), ou les derniers 16 caractères de contrôles en excluant les caractères nuls. Quand une erreur s'est produite sur le lien série, l'écriture dans le tampon (buffer) d'historique peut être inhibé par une commande spécifique et la lecture du tampon s'effectue grâce à un pointeur (PHB) qui permet un balayage cyclique du tampon commandé par le microprocesseur (11). La commande du tampon (buffer) d'historique est effectuée par un registre de commandes (ICL1) (Fig. 4B) relié au bus de commande CPB.

Le tampon d'historique IHB est accessible au microprocesseur (11a, 11c) par le bus de commande de CPB. Le registre de commande ICL1 est relié à 2 filtres (F1, F2). Le premier F1, lorsqu'il est activé par ICL1 ne laisse passer que les caractères de contrôle, et lorsqu'il n'est pas activé, est transparent. Le deuxième filtre F2 laisse passer tous les caractères non nuls.

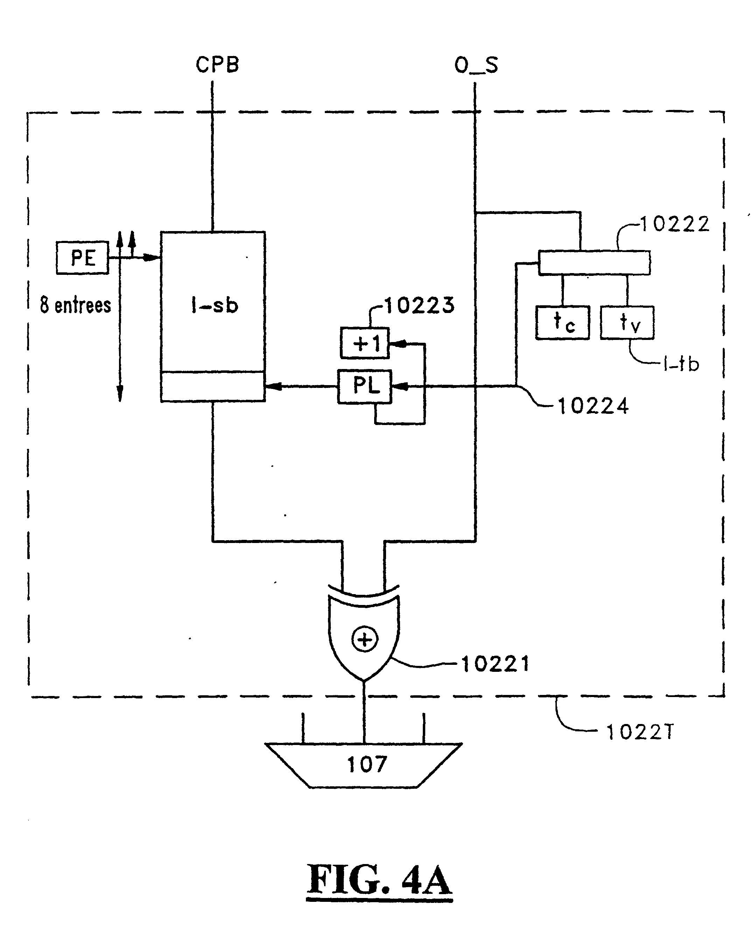

La machine d'état de substitution (1022_{T}) (Fig. 4A) comporte un tampon (buffer) de substitution (I-sb) qui a huit entrées et son contenu est combiné dans un OU exclusif (10221) avec le flot sortant (o-s, Out going stream) des caractères sur une longueur de 7 caractères.

La substitution commence avec le dernier caractère d'une séquence d'activation. Le caractère du flot sortant (o-s) correspondant au dernier caractère valide du tampon (buffer) de transmission, TDBUF est combiné dans une porte OU exclusif avec le premier caractère du tampon (buffer) de substitution (I-sb).

En fonctionnement sans substitution, le pointeur de lecture PL du tampon de substitution (I-sb) adresse le premier caractère du tampon de substitution (I-sb). Ce caractère qui est nul, en se combinant dans le OU exclusif (10221) avec les caractères du flot (o-s) ne modifie pas ces derniers, et le flot (o-s) est transmis au multiplexeur (107).

Un tampon (buffer) d'activation (I-tb) à deux entrées détermine par son contenu lorsque la rafale de substitution démarre. Ce tampon I-tb envoie la séquence d'activation tc sur un comparateur associé (10222) qui reçoit sur ses autres entrées le flot sortant (o-s). Cet instant de démarrage est donné lorsque la séquence d'activation (tc) correspond au flot de caractères sortant (o-s).

Dans ce cas, la sortie (10224) du comparateur active l'incrémenteur (10223) du pointeur de lecture PL pour permettre l'envoi simultané avec chaque nouveau caractère du flot sortant d'un caractère de substitution adressé parmi les 8 caractères du tampon I-sb par le pointeur de lecture.

Ce tampon (buffer) d'activation (I-tb) comporte une information (tv) qui participe à la comparaison et qui indique lorsqu'elle prend la valeur 00 qu'elle n'utilise pas la substitution. Dans le cas où l'information (tv) prend la valeur 10, la longueur de la séquence d'activation est égale à 1. Lorsque tv est égal à 11, la longueur de la séquence d'activation est de deux caractères. Ce circuit de substitution est représenté à la figure 4A.

Un pointeur d'écriture PE accessible par le microprocesseur (11a, 11c) à travers le bus CPB permet de charger dans le tampon de substitution par le bus CPB les caractères de substitution.

Ainsi, par le circuit de substitution on arrive à insérer des erreurs au moment où on le souhaite, et par le circuit (CRC) à détecter ces erreurs. Il est donc possible en rebouclant le port sur lui-même par la liaison (1090) et la commande Ict03, de détecter un fonctionnement correct des circuits de détection d'erreurs (CRC). Lorsque l'on connecte deux ports (10a, 10c) comme représenté sur la figure 2B, ces deux ports étant reliés par les circuits intégrés (1a, 1c) à des microprocesseurs respectifs (11a, 11c), il est possible de mettre en oeuvre un auto-test interne consistant à envoyer par le premier processeur (11a) une requête d'écriture de 64 bits dont le CRC correct est stocké.

Le processeur (11a) force le mécanisme d'injection d'erreurs du port (10a) et insère dans le message un caractère de contrôle CRC délibérément faux. Ce caractère est transmis par le port (10a) au port (10c) du circuit intégré (1c) esclave et lui aussi couplé à un deuxième processeur (11c). Ce port (10c) détecte une erreur de données par le calcul de CRC du message reçu qui ne correspond pas au CRC erroné inclus par le mécanisme d'insertion dans le message reçu. Cette détection d'erreurs génère l'envoi d'un message d'interruption au circuit d'émission (1a), lequel est reçu par le processeur (11a). Ce processeur (11a) vient lire dans le circuit du deuxième port (10c) la valeur CRC calculée sur les données transmises et déduit si le circuit CRC a correctement fonctionné en vérifiant que la valeur CRC mémorisée correspond à la valeur CRC reçue.

Ainsi on comprend que par ces mécanismes simples à mettre en oeuvre dans le port d'entrée sortie d'un circuit intégré, on permet la détection d'erreurs, et le contrôle du fonctionnement correct du circuit de port d'entrée sortie dans une liaison série à haut débit assurant ainsi la correction des erreurs, même si le taux d'erreurs est très faible.

La trace des erreurs s'effectue par la lecture du tampon (buffer) d'historique des caractères qui ont généré l'interruption de détection d'erreurs. Cette occurrence d'erreurs génère également l'interruption de la liaison de communication vers le processeur de façon à éviter la propagation de l'erreur dans la machine.

Toutefois, le problème dans les transmissions est que celles-ci peuvent incorporer soit des erreurs, soit du bruit Le calibrage peut rester exact, mais une erreur peut s'introduire et modifier un 0 en un 1, ce qui sera interprété comme une erreur de calibration par la cellule (109). Ceci nécessitera alors, la mise en place d'une procédure d'initialisation ou de réinitialisation de la communication série établie entre les deux dispositifs EMA et EMC décrits plus hauts. Dans ces deux dispositifs, l'un, par exemple EMA, et son processeur (11a) se comportera comme le maître, alors que l'autre contrôleur de liaison série SLC du dispositif EMC se comportera en esclave.

Chaque port de liaison série peut se trouver dans l'un des trois états suivants :
inconsistant ;
prêt pour l'initialisation ;
opérationnel.

L'état inconsistant est l'état dans lequel la liaison série se trouve après la mise sous tension ou après un incident L'état prêt pour l'initialisation est l'état dans lequel les deux ports constituant la liaison série sont initialisé, c'est-à-dire après l'initialisation des cartes incorporant ces ports. L'état opérationnel, est l'état dans lequel la liaison série est effective, dans chaque direction, un flux continu de caractères nuls (idle) est émis, tandis qu'aucune donnée n'est transmise. Dans cet état opérationnel, l'horloge de réception fonctionne.

L'étape d'initialisation des ports s'effectue de la manière suivante :
réinitialisation du port en chargeant un registre I-Contrôle 0 7.2 avec la valeur 1¹ ce qui a pour résultat d'isoler la logique CKR d'horloge de réception du circuit (109) ;
réinitialisation les logiques des horloges de transmission CKT,
et remise à zéro du lien série (120, 121).

Ceci s'effectue par :
a- le microprocesseur (11a) de la carte maître EMA qui réinitialise la cellule (109), par l'envoi d'une suite de caractères nuls (idle), ce qui après environ 2400 cycles d'horloge de transmission CKT, calibre le système de sérialisation ;
b1- le microprocesseur (11a) de la carte EMA déconnecte le circuit SLC (10A) en n'envoyant aucune donnée sur le bus C2LB.
b2- le circuit intégré (1a) de la carte EMA désactive la liaison série qui est en erreur et envoie donc 0 volt avec éventuellement du bruit sur la liaison série en erreur ;
b3- le circuit intégré (1a) de la carte EMA met son compteur de jetons à zéro ce qui l'empêche d'envoyer des messages ;
b4- la carte EMA réinitialise tous les pointeurs du circuit SLC. Ceux-ci réinitialisent également les status d'erreurs et les causes d'interruption, puis
b5- EMA transmet les caractères nuls / message neutre (idle).

De son côté, le processeur (11c) de la carte EMC effectue la même étape d'initialisation du port (10c) qui comporte les mêmes opérations (a, b1, b2, b3, b4, b5), et en plus une opération c' de validation du signal RECAL qui permet un réessai périodique de la recalibration de la cellule (109) lorsque la calibration n'a pas fonctionné pour des raisons telle que la réception sur la ligne de bruits qui ne permettent pas de calibrer l'horloge.

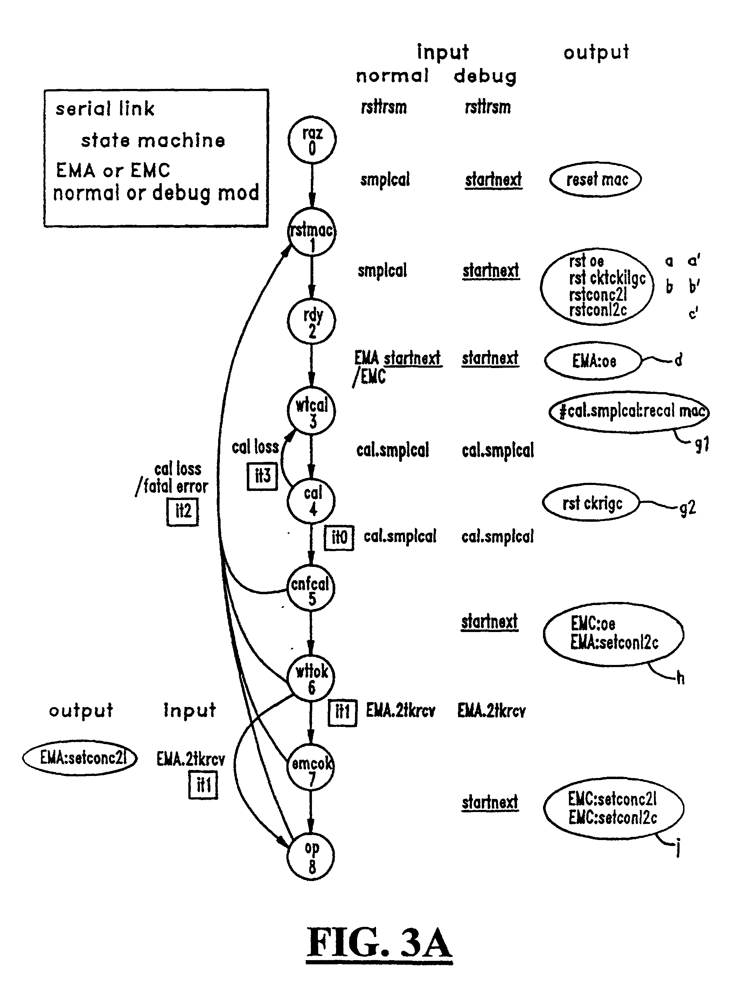

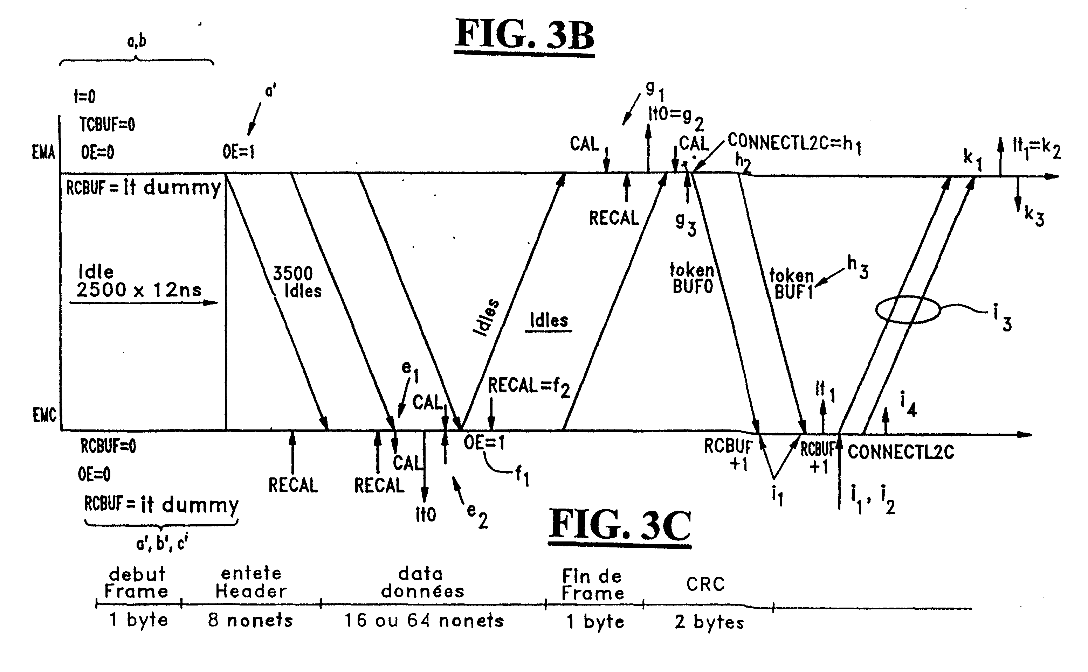

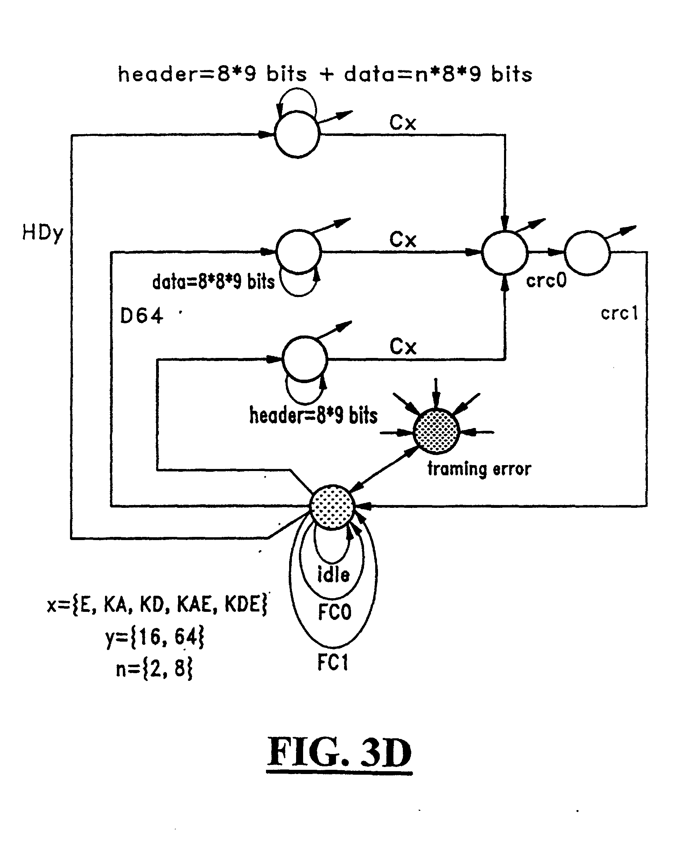

A ce moment les circuit transmetteurs de la carte maître EMA et de la carte esclave EMC sont calibrés. La carte esclave EMC est prête périodiquement pour la calibration en réception. Aucun signal n'est envoyé sur le lien série. La carte EMA est en attente pour une initialisation de lien (représenté à l'état 2 RDY de la figure 3). EMC est en état d'attente pour que son circuit de réception soit calibré, ce qui correspond à l'état WTCAL de la figure 3A.

Ces étapes d'initialisation des ports se poursuivent par une procédure d'initialisation de la communication série elle même.

Cette procédure se poursuit par l'envoi d'une commande I-Contrôle 0 7:2=1 qui signifie pour le circuit intégré un ordre de démarrage de la phase suivante (Start next).

L'initialisation de la liaison série comporte :
une étape d (fig. 3B) dans laquelle le processeur (11a) de la carte EMA maître positionne l'entrée OE (Output Enable) du circuit (109) de la figure 1b et transmet un flot continu de caractères nuls (idle) ;
une étape e1 dans laquelle le port (10c) de la carte esclave EMC après la réception d'un certain nombre de caractères nuls sur la ligne arrive à calibrer son horloge de réception CKR et positionne sa sortie CAL à "1" ;
une étape e2 dans laquelle le circuit SLC de la carte esclave EMC envoie une interruption au microprocesseur (11c) et invalide le signal RECAL puisque le circuit de réception du bloc SLC (10c) est déjà calibré ;
une étape e3 dans laquelle le processeur (11c) relié à la carte EMC réinitialise la logique CKR d'horloge de réception et au cours de laquelle deux messages fictifs (dummy messages) sont chargés dans les buffers de réception RDBUF du circuit (10c) de la carte esclave ;
une étape f1 au cours de laquelle le microprocesseur (11c) de la carte EMC envoie au circuit (1c) et au bloc port (10c) du circuit intégré (1c) une commande mettant l'entrée OE à la valeur 1 et transmet une série de caractères nuls pendant une durée suffisante de l'ordre de 3.500 signaux.

Le processus (fig. 3B) passe ensuite à l'étape g1 dans laquelle à la suite de la réception des caractères nuls, l'horloge CKR du port (10a) de la carte maître EMA est calibré et le signal de calibration CAL est positionné au niveau 1. Le port (10A) du circuit (1a) de la carte maître EMA envoie à l'étape g2 une interruption au microprocesseur (11a) de la carte EMA et celui-ci invalide le signal RECAL à l'étape g3 puisque le port de réception de EMA est déjà calibré.

Le processus se poursuit par l'étape g4 au cours de laquelle la carte maître EMA réinitialise la logique d'horloge de réception CKR et charge deux messages fictifs dans les tampons de réception RCBUF du circuit (10a) de la carte EMA.

Le processus se poursuit par l'étape h1 au cours de laquelle le microprocesseur (11a) de la carte maître EMA connecte le bus L2C au circuit SLC comme représenté à l'étape 5 de l'organigramme de la figure 3a. Le microprocesseur (11a) lit les messages fictifs à l'étape h2 et envoie deux jetons au port de la carte EMC. Ces jetons sont générés par une opération de lecture des deux messages fictifs stockés dans les tampons RDBUF du port (10a).

Le processus se poursuit par l'étape i1 dans laquelle le circuit (10c) de la carte esclave EMC reçoit les deux jetons, puis à l'étape i2 le circuit EMC envoie une interruption (IT1) au microprocesseur (10c).

Le processus se poursuit par l'étape j1 au cours de laquelle le microprocesseur de la carte esclave EMC connecte les bus L2C et C2L comme représenté entre les étapes 7 et 8 de l'organigramme de la figure 3a. Puis la carte EMC lit à l'étape j2 les messages fictifs, et à l'étape j3 envoie deux jetons (token) à la carte EMA, ces jetons sont générés par la lecture des deux messages fictifs. Le microprocesseur (11c) à l'étape j4 positionne l'état du circuit (10c) de la carte esclave EMC à l'état opérationnel. Les deux jetons sont stockés dans son compteur de jeton et permettent à chaque fois au processeur associé au circuit intégré de connaître l'état des lignes de transmission et la disponibilité de l'un ou l'autre des tampons.

Le processus se poursuit encore par l'étape k1, au cours de laquelle la carte EMA reçoit les deux jetons dans son compteur de jeton et, cette carte envoie à l'étape k2 une interruption IT1 au microprocesseur (11a) de la machine maître ; puis à l'étape k3, le microprocesseur positionne l'état du circuit (10a) de la carte maître EMA à l'état opérationnel.

Enfin dans le cas où après 15.000 cycles d'horloge de transmission CKT, le microprocesseur n'a pas reçu l'interruption IT1 de l'étape k2, il en déduit que l'initialisation automatique de la liaison série a échoué.

La machine d'état d'initialisation du port (1023) comporte un registre d'état I-Contrôle 0 6 : 3 de 3 bits, dans lequel 6 des valeurs possibles exprimables par les 3 bits signifient :
pour la première valeur, que le port SLC est déconnecté de L2CB ;
pour la deuxième valeur, que le compteur de jetons de contrôle de flux (Flow Control token counter) est mis à zéro ;
pour la troisième valeur, que la cellule (109) de liaison série est réinitialisée et que sa sortie OE est invalidée ;
pour la quatrième valeur, que la recalibration périodique est validée sur l'autre port de la carte esclave EMC ;
pour la cinquième valeur, que la logique d'horloge de réception CKR est isolée de la logique de l'horloge de transmission CKT de façon à éviter la perturbation des autres parties du circuit de commande des liaisons série (10a), lorsque l'horloge de réception ne fonctionne pas correctement ;
pour la sixième valeur, la réinitialisation de la logique d'horloge de transmission et de tous les pointeurs de tampons, les erreurs de status et des causes d'interruption.

Ainsi, avec ce processus d'initialisation, on est sûr que par des mécanismes simples au niveau du circuit intégré et du microprocesseur, la liaison s'établit correctement. Au niveau de l'initialisation de la liaison, on peut détecter comme erreur, une erreur de calibration lorsque le signal CAL est égal à 0.

Une autre source de détection d'erreurs est la valeur des jetons, qui doivent être alternativement le jeton 0 du buffer 0, et le jeton 1 du buffer 1, de chaque côté de la liaison série. Si ce n'est pas le cas, cela montre qu'il y a un problème. Une autre source d'erreurs peut être détectée par le caractère de contrôle de trame, par exemple, dans le début de trame, il y a un caractère inconnu ou inattendu ou d'absence de fin de trame. Enfin une dernière cause d'erreur est une erreur détectée sur le caractère de contrôle CRC comme représenté à la figure 3d.

La perte de calibration ou une erreur fatale sur la communication série génère une interruption IT2 et provoque le déroulement du mécanisme de traitement ci-après. Une détection de perte de calibration sur l'un ou l'autre des ports (10a, 10c) ou une commande de réinitialisation de la liaison par le microprocesseur associé déclenche le mécanisme suivant soit sur la carte maître EMA soit sur le port de la carte esclave EMC.

Une première étape a" d'isolation de la logique d'horloge de réception. Dans ces cas là, la situation est la même qu'à l'étape a pour la carte maître EMA ou a' pour la carte esclave EMC, ceci signifie que pour la carte qui a détecté une perte de calibration ou une erreur fatale, le signal OE (Output Enable) est désactivé, et aucune donnée n'est transmise au circuit éloigné de réception respectif EMC ou EMA. Puisque aucune donnée n'est transmise, le receveur éloigné détecte lui même également une perte de calibration et son microprocesseur démarre la procédure symétrique en isolant également la logique d'horloge de réception.

A partir de cet état, les deux ports du circuit maître et esclave sont dans la même position et doivent être réinitialisé tous les deux en suivant la procédure prévue qui est résumée ci-après:
calibration du port de réception de la carte esclave EMC et envoi d'une interruption au microprocesseur (11c) ;
calibration du port de réception de la carte maître EMA et envoi d'une interruption au microprocesseur maître (11a), et lecture des deux messages fictifs. A la réception des deux caractères de contrôle de flux, le port de réception de la carte esclave EMC envoie une interruption à son microprocesseur (11c), et lit les deux messages fictifs. A la réception des deux caractères de flux par le port de la carte maître, celle-ci envoie une interruption à son microprocesseur (11a).

Ainsi par ce mécanisme simple, on assure la mise en état opérationnel de la liaison tout en sachant qu'en cas de perte de calibration suite à une réception défectueuse sur la liaison série, le système va propager cette erreur sur le port situé à l'autre bout de la liaison et repartir dans une procédure d'initialisation sur des bases saines.

## Revendications

1. Procédé d'initialisation d'une liaison série (120, 121) entre au moins deux circuits intégrés (1a, 1c), chaque circuit intégré (1a, 1c) comportant un port d'entrée-sortie (10a, 10c) entre un bus parallèle et une liaison série (120, 121) ; ledit port (10a, 10c utilisant deux fréquences d'horloge différentes, une première de haute fréquence pour la liaison utilisée pour une horloge de transmission (CKT) et pour une horloge de reception (CKR), une deuxième, de fréquence plus basse pour les signaux arrivant du bus parallèle utilisée pour une horloge système (CKS), ledit procédé étant **caractérisé en ce qu'**il comporte les étapes suivantes :
réinitialisation de chaque port (10a, 10c) avec isolement de la logique d'horloge de réception (CKR) ;
réinitialisation de la logique d'horloge de transmission (CKT);
remise à zéro du lien série (120, 121) entre les ports (10a, 10c) desdits circuits intégrés (1a, 1c).

2. Procédé selon la revendication 1, **caractérisé en ce que** l'étape de réinitialisation de chaque port comporte :
une étape dans laquelle un microprocesseur (11a, 11c) associé à un port (10a, 10c) du lien série (120, 121) à réinitialiser envoie une succession de messages neutres qui permettent à une ligne à retard de réception (LLR) de se caler sur ces messages neutres et d'en extraire un signal d'horloge de réception, puis d'émettre un signal (CAL) indiquant que l'horloge de réception (CKR) est calibrée.

3. Procédé selon la revendication 1, **caractérisé en ce qu'**un microprocesseur (11a, 11c) associé à un desdits circuits intégrés (1a, 1c) déconnecte un port (10a, 10c) dudit lien série (120, 121) à réinitialiser en n'envoyant aucune donnée sur le bus parallèle qui le relie à ce port (10a, 10c) ;
le circuit intégré (1a, 1c) désactive sa sortie série et envoie un signal à O volt mêlé éventuellement à du bruit ;
un compteur de bits du circuit intégré (1a, 1c) est mis à zéro par ledit circuit intégré (1a, 1c) pour éviter d'envoyer des messages et pour réinitialiser tous ses pointeurs, chacun des bits dudit compteur, dit bit de jeton, étant représentatif de la disponibilité d'un tampon associé.

4. Procédé selon les revendications 2 et 3, **caractérisé en ce que** chacune des étapes précédentes, dites d'initialisation des ports, est reproduite sur chacun des ports de chacun des circuits reliés par la liaison série (120, 121).

5. Procédé selon la revendication 4, **caractérisé en ce que** lesdites étapes d'initialisation des ports se poursuivent par une étape d'initialisation d'une communication série.

6. Procédé selon la revendication 5, **caractérisé en ce que** cette étape d'initialisation de la communication série comporte :
une étape d'établissement d'une liaison maître/esclave et une étape d'établissement d'une liaison esclave/maître, ces étapes permettant de définir un circuit maître (1a) et un circuit esclave (1c) ;
une étape de connexion du bus parallèle sur le port (10a) du circuit maître (1a) ;
une étape de connexion du bus parallèle sur le port (10c) du circuit esclave (1c).

7. Procédé selon la revendication précédente, **caractérisé en ce que** l'étape de l'établissement de la liaison maître/esclave comporte :
une étape dans laquelle un processeur (11a) associé au circuit maître (1a) positionne une entrée (OE) du port (10a) du circuit maître (1a) à une valeur 1 et transmet un flot continu de caractères nuls ;
une étape de calibration de l'horloge de réception (CKR) du port (10c) du circuit esclave 1c) ; et
une étape d'émission d'une interruption vers un microprocesseur (11c) associé au
circuit esclave (1c) ;
une étape de réinitialisation de la logique d'horloge de réception du circuit esclave (1c) et d'émission de deux messages fictifs dans des buffers de réception du port (10c) du circuit esclave (1c) ;
une étape de positionnement d'une entrée (OE) du port (10c) du circuit esclave (1c) à la valeur 1 ; et
une étape de transmission de caractères nuls pendant une durée suffisante déterminée par un signal d'échantillonnage périodique du port esclave (10c).

8. Procédé selon la revendication 6, **caractérisé en ce que** l'étape d'établissement de la liaison esclave/maître comporte :
une étape de calibrage de l'horloge de réception (CKR) du port (10a) du circuit maître (1a) et de positionnement du signal de calibration de ce port (10a) au niveau 1 ;
une étape d'envoi d'une interruption vers le microprocesseur (11a) associé à ce circuit maître (1a) ;
une étape de réinitialisation de la logique d'horloge de réception (CKR) du port (10a) de ce circuit maître (1a) et de chargement de deux messages fictifs dans des buffers de réception (RCBUF) du circuit maître (1a).

9. Procédé selon la revendication 7, **caractérisé en ce que** l'étape de connexion du bus parallèle sur le port maître (10a) comporte :
une étape au cours de laquelle le microprocesseur (11a) associé au circuit maître (1a) connecte son bus parallèle au port (10a) du circuit maître (1a) ;
une étape de lecture des messages fictifs émis précédemment et d'envoi de deux bits de jetons au port (10c) du circuit esclave (1c) ;
une étape de réception des deux bits de jetons par le circuit esclave (1c) ; et
une étape d'émission par ce dernier (1c) d'une interruption à destination du microprocesseur (11c) associé ;
une étape de connexion de bus parallèles reliés au microprocesseur (11c) associé au circuit esclave (1c) ;
une étape de lecture des messages fictifs; et
une étape d'envoi de deux bits de jetons au circuit maître (1a).

10. Procédé selon la revendication précédente, **caractérisé en ce que** les bits de jetons sont générés par une opération de lecture des messages fictifs stockés dans les buffers de réception (RCBUF) du port maître (10a) respectivement esclave (10c).

11. Procédé selon une des revendications précédentes, **caractérisé en ce que** la détection d'une perte de calibration sur l'un ou l'autre des ports ou une commande de réinitialisation de la liaison déclenche la succession des étapes suivantes :
une étape d'isolation de la logique d'horloge de réception;
une étape de désactivation d'un signal (DE) entraînant pour le circuit ayant détecté la perte de calibration l'interruption des transmissions de données au circuit de réception éloigné;
une étape de détection de la perte de calibration par le port du circuit de réception éloigné; et
une étape de démarrage d'une procédure d'isolement de la logique d'horloge de réception de ce dernier circuit.

12. Dispositif pour la mise en oeuvre du procédé d'initialisation d'une liaison série (120, 121) entre au moins deux circuits intégrés (1a, 1c) selon les revendications 1 à 11, chaque circuit (1a, 1c) comportant un port d'entrée-sortie (10a, 10c) entre un bus parallèle et une liaison série (120, 121) ; ledit port (10a, 10c) utilisant deux fréquences d'horloge différentes, une première, de fréquence plus élevée pour la liaison série utilisée pour une horloge de transmission (CKT) et pour une horloge de reception (CKR), une deuxième, de fréquence plus basse pour les signaux arrivant du bus parallèle utilisée pour une horloge système (CKS) ou basse fréquence, ledit dispositif étant **caractérisé en ce qu'**il comporte :
des moyens de réinitialisation de chaque port (10a, 10c) avec isolement de la logique d'horloge de réception (CKR) ;
des moyens de réinitialisation de la logique d'horloge de transmission (CKT);
des moyens de remise à zéro du lien série (120, 121) entre les ports (10a, 10c) desdits circuits intégrés (1a, 1c).

13. Dispositif selon la revendication 12, **caractérisé en ce qu'**il comporte des moyens permettant à un microprocesseur (11a, 11c) associé à un port (10a, 10c) du lien série (120, 121) à réinitialiser, d'envoyer une succession de messages neutres qui permettent à une ligne à retard de réception (LLR) de se caler sur ces messages neutres et d'en extraire un signal d'horloge de réception, puis d'émettre un signal (CAL) indiquant que l'horloge de réception (CKR) est calibrée.

14. Dispositif selon la revendication 12, **caractérisé en ce qu'**il comporte :
des moyens permettant à un microprocesseur (11a, 11c), associé à un desdits circuits intégrés (1a, 1c) possédant un port dudit lien série (120, 121) à réinitialiser, de déconnecter le port (10a, 10c) en n'envoyant aucune donnée sur le bus parallèle qui le relie à ce port (10a, 10c) ;
des moyens permettant au circuit intégré (1a, 1c) de désactiver sa sortie série et
d'envoyer un signal à 0 volt mêlé éventuellement à du bruit ;
des moyens permettant de mettre à zéro un compteur de bits du circuit intégré (1a, 1c), chacun des bits du compteur, dit bit de jeton, étant représentatif de la disponibilité d'un tampon associé, pour éviter d'envoyer des messages, ces moyens permettant également de réinitialiser tous les pointeurs dudit circuit intégré (1a).

15. Dispositif selon la revendication 14, **caractérisé en ce qu'**il comporte des moyens d'initialisation d'une communication série.

16. Dispositif selon la revendication 15, **caractérisé en ce qu'**il comporte :
des moyens d'établissement d'une liaison maître/esclave et des moyens d'établissement d'une liaison esclave/maître permettant de définir un circuit maître (1a) et un circuit esclave (1b) ;des moyens de connexion du bus parallèle sur le port (10a) du circuit maître (1a) ;
des moyens de connexion du bus parallèle sur le port (10c) du circuit esclave (1b).

17. Dispositif selon la revendication précédente, **caractérisé en ce qu'**il comporte :
des moyens permettant à un processeur (11a) associé audit circuit maître (1a) de positionner une entrée du port (10a) du circuit maître (1a) à une valeur déterminée et de transmettre un flot continu de caractères nuls ;
des moyens de calibration de l'horloge de réception (CKR) du port (10c) du circuit esclave (1c) ;
des moyens d'émission d'une interruption vers un microprocesseur (11c) associé au circuit esclave (1c) ;
des moyens de réinitialisation de la logique d'horloge de réception du circuit esclave (1c) et d'émission de deux messages fictifs dans des buffers de réception du port (10c) du circuit esclave (1c) ;
des moyens de positionnement d'une entrée du port (10c) du circuit esclave (1c) à la valeur 1 ; et
des moyens de transmission de caractères nuls pendant une durée suffisante déterminée par un signal d'échantillonnage périodique du port esclave (10c) et
de validation d'un signal de recalibration périodique du port esclave (10c).

18. Dispositif selon la revendication 16, **caractérisé en ce qu'**il comporte :
des moyens de calibrage de l'horloge de réception (CKR) du port (10a) du circuit maître (1a) et de positionnement d'un signal de calibration de ce port (10a) au niveau 1 ;
des moyens d'envoi d'une interruption vers le microprocesseur (11a) associé à ce circuit maître (1a);
des moyens de réinitialisation de la logique d'horloge de réception (CKR) du port (10a) de ce circuit maître (1a) et de chargement de deux messages fictifs dans des buffers de réception (RCBUF) du circuit maître (1a).

19. Dispositif selon la revendication 17, **caractérisé en ce qu'**il comporte :
des moyens de connexion d'un bus parallèle d'un microprocesseur (11a) associé au circuit maître (1a) au port (10a) dudit circuit maître (1a) ;
des moyens de lecture des messages fictifs émis précédemment et d'envoi de deux bits de jetons d'un compteur de bits du circuit maître (1a) au port (10c) du circuit esclave (1c) ;
des moyens de réception des deux bits de jetons par le circuit esclave (1c) ; et
des moyens d'émission par ce dernier (1c) d'une interruption à destination d'un microprocesseur associé (11c) ;
des moyens de connexion de bus parallèles reliés au microprocesseur (11c) associé au circuit esclave (1c) ;
des moyens de lecture des messages fictifs; et
des moyens d'envoi de deux bits de jetons au circuit maître (1a).

20. Dispositif selon la revendication précédente, **caractérisé en ce que** des moyens génèrent des bits de jetons par une opération de lecture des messages fictifs stockés dans les buffers de réception (RCBUF) du port maître (10a) respectivement esclave (10c).

21. Dispositif selon une des revendications 12 à 20 **caractérisé en ce que** des moyens de détection d'une perte de calibration sur l'un ou l'autre des ports ou d'une commande de réinitialisation de la liaison déclenchent : des moyens d'isolation de la logique d'horloge de réception ; des moyens de désactivation d'un signal entraînant pour le circuit ayant détecté la perte de calibration l'interruption des transmissions de données au circuit de réception éloigné ; des moyens de détection de la perte de calibration par le port du circuit de réception éloigné ; et des moyens de démarrage d'une procédure d'isolement de la logique d'horloge de réception de ce dernier circuit.

## Claims

1. Method of initialisation of a serial link (120, 121) between at least two integrated circuits (1a, 1c), each integrated circuit (1a, 1c) having an input-output port (10a, 10c) between a parallel bus and a serial link (120, 121); said port (10a, 10c) using two different clock frequencies, a first high-frequency one for the link used for a transmission clock (CKT) and for a reception clock (CKR), a second, lower-frequency one for the signals arriving from the parallel bus and used for a system clock (CKS), said method being **characterised in that** it comprises the following steps:
reinitialisation of each port (10a, 10c) with isolation of the reception clock logic (CKR);
reinitialisation of the transmission clock logic (CKT);
resetting of the serial link (120, 121) between the ports (10a, 10c) of said integrated circuits (1a, 1c).

2. Method according to Claim 1, **characterised in that** the step of reinitialisation of each port comprises:
a step in which a microprocessor (11a, 11c) associated with a port (10a, 10c) of the serial link (120, 121) to be reinitialised sends a succession of neutral messages that allow a reception delay line (LLR) to be inserted over these neutral messages and to extract therefrom a reception clock signal, then to send a signal (CAL) indicating that the reception clock (CKR) is calibrated.

3. Method according to Claim 1, **characterised in that** a microprocessor (11a, 11c) associated with one of said integrated circuits (1a, 1c) disconnects a port (10a, 10c) of said serial link (120, 121) to be reinitialised by not sending any data over the parallel bus that connects it to this port (10a, 10c);
the integrated circuit (1a, 1c) deactivates its serial output and sends a 0 volt signal, mixed with noise if appropriate;
a bit counter of the integrated circuit (1a, 1c) is reset by said integrated circuit (1a, 1c) in order to avoid sending messages and in order to reinitialise all its pointers, each of the bits of said counter, known as a token bit, being representative of the availability of the associated buffer.

4. Method according to Claims 2 and 3, **characterised in that** each of the preceding steps, known as port initialisation steps, is reproduced on each of the ports of each of the circuits connected by the serial link (120, 121).

5. Method according to Claim 4, **characterised in that** said port initialisation steps are followed by a step of initialising serial communication.

6. Method according to Claim 5, **characterised in that** this step of initialising serial communication comprises:
a step of establishment of a master / slave link and a step of establishment of a slave / master link, these steps making it possible to define a master circuit (1a) and a slave circuit (1c);
a step of connection of the parallel bus to the port (10a) of the master circuit (1a);
a step of connection of the parallel bus on the port (10c) of the slave circuit (1c).

7. Method according to the preceding claim, **characterised in that** the step of the establishment of the master / slave link comprises:
a step in which a processor (11a) associated with the master circuit board (1a) sets an input (OE) of the port (10a) of the master circuit (1a) to a value 1 and transmits a continuous stream of blank characters;
a step of calibration of the reception clock (CKR) of the port (10c) of the slave circuit (1c); and
a step of sending of an interrupt to a microprocessor (11c) associated with the slave circuit (1c);
a step of reinitialisation of the reception clock logic of the slave circuit (1c) and of sending of two fictitious messages in reception buffers of the port (10c) of the slave circuit (1c);
a step of setting of an input (OE) of the port (10c) of the slave circuit (1c) to the value 1; and
a step of transmission of blank characters for a sufficient length of time determined by a periodic sampling signal of the slave port (10c).

8. Method according to Claim 6, **characterised in that** the step of establishing the slave / master link comprises:
a step of calibration of the reception clock (CKR) of the port (10a) of the master circuit (1a) and of setting of the calibration signal for this port (10a) to level 1;
a step of sending of an interrupt to the microprocessor (11a) associated with this master circuit (1a);
a step of reinitialisation of the reception clock logic (CKR) of the port (10a) of this master circuit (1a) and of loading of two fictitious. messages in reception buffers (RCBUF) of the master circuit (1a).

9. Method according to Claim 7, **characterised in that** the step of connecting the parallel bus to the master port (10a) comprises:
a step during which the microprocessor (11a) associated with the master circuit (1a) connects its parallel bus to the port (10a) of the master circuit (1a);
a step of reading of the fictitious messages transmitted previously and of sending of two token bits to the port (10c) of the slave circuit (1c);
a step of reception of the two token bits by the slave circuit (1c); and
a step for sending by the latter (1c) an interrupt to the associated microprocessor (11c);
a step of connection of the parallel buses connected to the associated microprocessor (11c) with the slave circuit (1c);
a step of reading of the fictitious messages; and
a step of sending of two token bits to the master circuit (1a).

10. Method according to the preceding claim, **characterised in that** the token bits are generated by an operation of reading the fictitious messages stored in the buffers (RCBUF) of the master (10a) and slave (10c) port respectively.

11. Method according to one of the preceding claims, **characterised in that** the detection of a loss of calibration on one or other of the ports or a command of reinitialisation of the link triggers the following series of steps:
a step of isolation of the reception clock logic;
a step of deactivation of a signal (DE) resulting, for the circuit that has detected the loss of calibration, in the interruption of data transmission to the remote reception circuit;
a step of detection of the loss of calibration by the port of the remote reception circuit; and
a step of starting up a procedure of isolation of the reception clock logic of the latter circuit.

12. Device for the implementation of the method of initialisation of a serial link (120, 121) between at least two integrated circuits (1a, 1c) according to Claims 1 to 11, each circuit (1a, 1c) having an input-output port (10a, 10c) between a parallel bus and a serial link (120, 121); said port (10a, 10c) using two different clock frequencies, a first, higher-frequency one for the serial link used for a transmission clock (CKT) and for a reception clock (CKR), a second, lower-frequency one for the signals arriving from the parallel bus used for a system clock (CKS) or low-frequency clock is **characterised in that** it comprises:
means for reinitialisation of each port (10a, 10c) with isolation of the reception clock logic (CKR);
means for reinitialisation of the transmission clock logic (CKT);
means for resetting the serial link (120, 121) between the ports (10a, 10c) of said integrated circuits (1a, 1c).

13. Device according to Claim 12, **characterised in that** it comprises means allowing a microprocessor (11a, 11c) associated with a port (10a, 10c) of the serial link (120, 121) to be reinitialised, to send a succession of neutral messages that allow a reception delay line (LLR) to be inserted over these neutral messages and to extract therefrom a reception clock signal, then to send a signal (CAL) indicating that the reception clock (CKR) is calibrated.

14. Device according to Claim 12, **characterised in that** it comprises:
means allowing a microprocessor (11a, 11c) associated with one of said integrated circuits (1a, 1c) having a port of said serial link (120, 121) to be reinitialised, to disconnect the port (10a, 10c) by not sending any data over the parallel bus that connects it to this port (10a, 10c);
means allowing the integrated circuit (1a, 1c) to deactivate its serial output and to send a 0 volt signal, mixed with noise if appropriate;
means making it possible to reset a bit counter of the integrated circuit (1a, 1c), each of the bits of the counter, known as a token bit, being representative of the availability of an associated buffer, in order to avoid sending messages, these means also making it possible to reinitialise all the pointers of said integrated circuit (1a).

15. Device according to Claim 14, **characterised in that** it comprises means for initialisation of serial communication.

16. Device according to Claim 15, **characterised in that** it comprises:
means for establishing a master / slave link and means for establishing a slave / master link making it possible to define a master circuit (1a) and a slave circuit (1b); means for connection of the parallel bus to the port (10a) of the master circuit (1a);
means for connection of the parallel bus to the port (10c) of the slave circuit (1b).

17. Device according to the preceding claim, **characterised in that** it comprises:
means allowing a processor (11a) associated with said master circuit (1a) to set an input of the port (10a) of the master circuit (1a) to a given value and to transmit a continuous stream of blank characters;
means for calibrating the reception clock (CKR) of the port (10c) of the slave circuit (1c);
means for sending an interrupt to the microprocessor (11c) associated with the slave circuit (1c);
means for reinitialisation of the reception clock logic of the slave circuit (1c) and for sending two fictitious messages in reception buffers of the port (10c) of the slave circuit (1c);
means for setting an input of the port (10c) of the slave circuit (1c) to the value 1; and
means for transmission of blank characters for a sufficient length of time determined by a periodic sampling signal from the slave port (10c) and
for validation of a periodic recalibration signal from the slave port (10c).

18. Device according to Claim 16, **characterised in that** it comprises:
means for calibrating the reception clock (CKR) of the port (10a) of the master circuit (1a) and for setting a calibration signal of this port (10a) to level 1;
means for sending an interrupt to the microprocessor (11a) associated with this master circuit (1a);
means for reinitialisation of the reception clock logic (CKR) of the port (10a) of this master circuit (1a) and for loading two fictitious messages in reception buffers (RCBUF) of the master circuit (1a).

19. Device according to Claim 17, **characterised in that** it comprises:
means for connection of a parallel bus of a microprocessor (11a) associated with the master circuit (1a) to the port (10a) of said master circuit (1a);
means for reading the fictitious messages transmitted previously and for sending two token bits from a bit counter of the master circuit (1a) to the port (10c) of the slave circuit (1c);
means for reception of the two token bits by the slave circuit (1c); and
means for sending by the latter (1c) an interrupt to an associated microprocessor (11c);
means for connection of the parallel buses connected to the associated microprocessor (11c) to the slave circuit (1c);
means for reading the fictitious messages; and
means for sending two token bits to the master circuit (1a).

20. Device according to the preceding claim, **characterised in that** there are means generating token bits by an operation of reading the fictitious messages stored in the reception buffers (RCBUF) of the master port (10a) and slave port (10c) respectively.

21. Device according to one of the Claims 12 to 20, **characterised in that** means for detection of a loss of calibration on one or other of the ports, or for controlling reinitialisation of the triggering link: means for isolation of the reception clock logic; means for deactivation of a signal resulting, for the circuit that has detected the loss of calibration, in the interruption of data transmission to the remote reception circuit; means for detection of the loss of calibration by the port of the remote reception circuit; and means for starting up a procedure of isolation of the reception clock logic of the latter circuit.

## Patentansprüche

1. Verfahren zum Initialisieren einer seriellen Verbindung (120, 121) zwischen wenigstens zwei integrierten Schaltungen (1a, 1c), wovon jede einen Eingangs/Ausgangs-Port (10a, 10c) zwischen einem parallelen Bus und einer seriellen Verbindung (120, 121) umfaßt; wobei der Port (10a, 10c) zwei unterschiedliche Taktfrequenzen verwendet, eine erste hohe Frequenz für die Verbindung, die für einen Sendetakt (CKT) und für einen Empfangstakt (CKR) verwendet wird, und eine zweite niedrigere Frequenz für die vom parallelen Bus ankommenden Signale, die für einen Systemtakt (CKS) verwendet wird, wobei das Verfahren **dadurch gekennzeichnet ist, daß** es die folgenden Schritte umfaßt:
Reinitialisieren jedes Ports (10a, 10c) mit Isolation der Empfangstaktlogik (CKR);
Reinitialisieren der Sendetaktlogik (CKT);
Zurücksetzen auf null der seriellen Verbindung (120, 121) zwischen den Ports (10a, 10c) der integrierten Schaltungen (1a, 1c).

2. Verfahren nach Anspruch 1, **dadurch gekennzeichnet, daß** der Reinitialisierungsschritt jedes Ports umfaßt:
einen Schritt, bei dem ein Mikroprozessor (11a, 11c), der einem zu reinitialisierenden Port (10a, 10c) der seriellen Verbindung (120, 121) zugeordnet ist, eine Folge von neutralen Nachrichten schickt, die einer Empfangsverzögerungsleitung (LLR) ermöglichen, sich auf diese neutralen Nachrichten einzustellen und daraus ein Empfangstaktsignal zu extrahieren und dann ein Signal (CAL) auszusenden, das angibt, daß der Empfangstakt (CKR) kalibriert worden ist.

3. Verfahren nach Anspruch 1, **dadurch gekennzeichnet, daß** ein einer der integrierten Schaltungen (1a, 1c) zugeordneter Mikroprozessor (11a, 11c) einen zu reinitialisierenden Port (10a, 10c) der seriellen Verbindung (120, 121) abtrennt, indem er auf dem parallelen Bus, der ihn mit diesem Port (10a, 10c) verbindet, keinerlei Daten schickt;
die integrierte Schaltung (1a, 1c) ihren seriellen Ausgang deaktiviert und ein Signal mit 0 Volt, das eventuell mit Rauschen vermischt ist, schickt;
ein Bitzähler der integrierten Schaltung (1a, 1c) von der integrierten Schaltung (1a, 1c) auf null gesetzt wird, um zu vermeiden, daß Nachrichten geschickt werden, und um alle ihre Zeiger zu reinitialisieren, wobei jedes der Bits des Zählers, sogenannte Jeton-Bits, die Verfügbarkeit eines zugeordneten Pufferspeichers repräsentiert.

4. Verfahren nach den Ansprüchen 2 und 3, **dadurch gekennzeichnet, daß** jeder der vorhergehenden sogenannten Port-Initialisierungsschritte für jeden der Ports jeder der durch die serielle Verbindung (120, 121) verbundenen Schaltungen wiederholt wird.

5. Verfahren nach Anspruch 4, **dadurch gekennzeichnet, daß** den Schritten der Initialisierung der Ports ein Schritt der Initialisierung einer seriellen Kommunikation folgt.

6. Verfahren nach Anspruch 5, **dadurch gekennzeichnet, daß** dieser Schritt der Initialisierung der seriellen Kommunikation umfaßt:
einen Schritt der Herstellung einer Master/Slave-Verbindung und einen Schritt der Herstellung einer Slave/Master-Verbindung, wobei diese Schritte ermöglichen, eine Master-Schaltung (1a) und eine Slave-Schaltung (1c) zu definieren;
einen Schritt des Verbindens des parallelen Busses mit dem Port (10a) der Master-Schaltung (1a);
einen Schritt des Verbindens des parallelen Busses mit dem Port (10c) der Slave-Schaltung (1c).

7. Verfahren nach dem vorhergehenden Anspruch, **dadurch gekennzeichnet, daß** der Schritt des Herstellens der Master/Slave-Verbindung umfaßt:
einen Schritt, bei dem ein der Master-Schaltung (1a) zugeordneter Prozessor (11a) einen Eingang (OE) des Ports (10a) der Master-Schaltung (1a) auf einen Wert 1 einstellt und einen kontinuierlichen Strom von Null-Zeichen sendet;
einen Schritt des Kalibrierens des Empfangstakts (CKR) des Ports (10c) der Slave-Schaltung (1c); und
einen Schritt des Sendens einer Unterbrechung zu einem der Slave-Schaltung (1c) zugeordneten Mikroprozessor (11c);
einen Schritt der Reinitialisierung der Empfangstaktlogik der Slave-Schaltung (1c) und des Sendens zweier fiktiver Nachrichten in Empfangspuffer des Ports (10c) der Slave-Schaltung (1c);
einen Schritt des Einstellens eines Eingangs (OE) des Ports (10c) der Slave-Schaltung (1c) auf den Wert 1; und
einen Schritt des Sendens von Null-Zeichen während einer ausreichenden Dauer, die durch ein periodisches Taktsignal des Slave-Ports (10c) bestimmt ist.

8. Verfahren nach Anspruch 6, **dadurch gekennzeichnet, daß** der Schritt des Herstellens der Slave/Master-Verbindung umfaßt:
einen Schritt des Kalibrierens des Empfangstakts (CKR) des Ports (10a) der Master-Schaltung (1a) und der Einstellung des Kalibrierungssignals dieses Ports (10a) auf den Pegel 1;
einen Schritt des Schickens einer Unterbrechung zu dem dieser Master-Schaltung (1a) zugeordneten Mikroprozessor (11a);
einen Schritt des Reinitialisierens der Empfangstaktlogik (CKR) des Ports (10a) dieser Master-Schaltung (1a) und des Ladens zweier fiktiver Nachrichten in Empfangspuffer (RCBUF) der Master-Schaltung (1a).

9. Verfahren nach Anspruch 7, **dadurch gekennzeichnet, daß** der Schritt des Verbindens des parallelen Busses mit dem Master-Port (10a) umfaßt:
einen Schritt, in dessen Verlauf der der Master-Schaltung (1a) zugeordnete Mikroprozessor (11a) seinen parallelen Bus mit dem Port (10a) der Master-Schaltung (1a) verbindet;
einen Schritt des Lesens fiktiver Nachrichten, die vorher gesendet worden sind, und des Schickens zweier Jeton-Bits zum Port (10c) der Slave-Schaltung (1c);
einen Schritt des Empfangens zweier Jeton-Bits durch die Slave-Schaltung (1c); und
einen Schritt, bei dem die Slave-Schaltung (1c) eine Unterbrechung zu dem zugeordneten Mikroprozessor (11c) sendet;
einen Schritt des Verbindens von mit dem zugeordneten Mikroprozessor (11c) verbundenen parallelen Bussen mit der Slave-Schaltung (1c);
einen Schritt des Lesens fiktiver Nachrichten; und
einen Schritt des Schickens zweier Jeton-Bits zur Master-Schaltung (1a).

10. Verfahren nach dem vorhergehenden Anspruch, **dadurch gekennzeichnet, daß** die Jeton-Bits durch eine Operation des Lesens fiktiver Nachrichten, die in den Empfangspuffern (RCBUF) des Master-Ports (10a) bzw. des Slave-Ports (10c) gespeichert sind, erzeugt werden.

11. Verfahren nach einem der vorhergehenden Ansprüche, **dadurch gekennzeichnet, daß** die Erfassung eines Kalibrierungsverlusts bei dem einen oder den anderen der Ports oder eines Reinitialisierungsbefehls der Verbindung die Folge der folgenden Schritte auslöst:
einen Schritt des Isolierens der Empfangstaktlogik;
einen Schritt des Deaktivierens eines Signals (DE), das für die Schaltung, die den Kalibrierungsverlust erfaßt hat, die Unterbrechung des Sendens von Daten zur entfernten Empfangsschaltung zur Folge hat;
einen Schritt des Erfassens des Kalibrierungsverlusts durch den Port der entfernten Empfangsschaltung; und
einen Schritt des Startens einer Prozedur zum Trennen der Empfangstaktlogik von dieser letzteren Schaltung.

12. Vorrichtung für die Ausführung des Verfahrens zur Initialisierung einer seriellen Verbindung (120, 121) zwischen wenigstens zwei integrierten Schaltungen (1a, 1c) nach den Ansprüchen 1 bis 11, wobei jede Schaltung (1a, 1c) einen Eingangs/Ausgangs-Port (10a, 10c) zwischen einem parallelen Bus und einer seriellen Verbindung (120, 121) umfaßt; wobei der Port (10a, 10c) zwei unterschiedliche Taktfrequenzen verwendet, eine erste mit höherer Frequenz für die serielle Verbindung, die für einen Sendetakt (CKT) und für einen Empfangstakt (CKR) verwendet wird, und eine zweite niedrigere Frequenz für die vom parallelen Bus ankommenden Signale, die für einen Systemtakt (CKS) oder niederfrequenten Takt verwendet wird, wobei die Vorrichtung **dadurch gekennzeichnet ist, daß** sie umfaßt:
Mittel zum Reinitialisieren jedes Ports (10a, 10c) mit Isolation der Empfangstaktlogik (CKR);
Mittel zum Reinitialisieren der Sendetaktlogik (CKT);
Mittel zum Zurücksetzen auf null der seriellen Verbindung (120, 121) zwischen den Ports (10a, 10c) der integrierten Schaltungen (1a, 1c).

13. Vorrichtung nach Anspruch 12, **dadurch gekennzeichnet, daß** sie Mittel umfaßt, die einem Mikroprozessor (11a, 11c), der einem zu reinitialisierenden Port (10a, 10c) der seriellen Verbindung (120, 121) zugeordnet ist, ermöglichen, eine Folge von neutralen Nachrichten zu schicken, die einer Empfangsverzögerungsleitung (LLR) ermöglichen, sich auf diese neutralen Nachrichten einzustellen und daraus ein Empfangstaktsignal zu extrahieren und dann ein Signal (CAL) zu senden, das angibt, daß der Empfangstakt (CKR) kalibriert ist.

14. Vorrichtung nach Anspruch 12, **dadurch gekennzeichnet, daß** sie umfaßt:
Mittel, die einem Mikroprozessor (11a, 11c), der einer der integrierten Schaltungen (1a, 1c) zugeordnet ist, die einen zu reinitialisierenden Port der seriellen Verbindung (120, 121) besitzen, ermöglichen, den Port (10a, 10c) abzutrennen, indem sie auf dem parallelen Bus, der ihn mit diesem Port (10a, 10c) verbindet, keinerlei Daten schicken;
Mittel, die der integrierten Schaltung (1a, 1c) ermöglichen, ihren seriellen Ausgang zu deaktivieren und ein Signal mit 0 Volt, das eventuell mit Rauschen vermischt ist, zu schicken;
Mittel, die ermöglichen, einem Bitzähler der integrierten Schaltung (1a, 1c) auf null zu setzen, wobei jedes der Bits des Zählers, das Jeton-Bit genannt wird, die Verfügbarkeit eines zugeordneten Pufferspeichers repräsentiert, um zu vermeiden, daß Nachrichten geschickt werden, wobei diese Mittel außerdem die Reinitialisierung aller Zeiger der integrierten Schaltung (1a) ermöglichen.

15. Vorrichtung nach Anspruch 14, **dadurch gekennzeichnet, daß** sie Mittel zum Reinitialisieren einer seriellen Kommunikation umfaßt.

16. Vorrichtung nach Anspruch 15, **dadurch gekennzeichnet, daß** sie umfaßt:
Mittel zum Herstellen einer Master/Slave-Verbindung und Mittel zum Herstellen einer Slave/Master-Verbindung, die ermöglichen, eine Master-Schaltung (1a) und eine Slave-Schaltung (1b) zu definieren; Mittel zum Verbinden des parallelen Busses mit dem Port (10a) der Master-Schaltung (1a);
Mittel zum Verbinden des parallelen Busses mit dem Port (10c) der Slave-Schaltung (1b).

17. Vorrichtung nach dem vorhergehenden Anspruch, **dadurch gekennzeichnet, daß** sie umfaßt:
Mittel, die einem dieser Master-Schaltung (1a) zugeordneten Prozessor (11a) ermöglichen, einen Eingang des Ports (10a) der Master-Schaltung (1a) auf einen bestimmten Wert einzustellen und einen kontinuierlichen Strom von Null-Zeichen zu senden;
Mittel zum Kalibrieren des Empfangstakts (CKR) des Ports (10c) der Slave-Schaltung (1c);
Mittel zum Senden einer Unterbrechung zu einem der Slave-Schaltung (1c) zugeordneten Mikroprozessor (11c);
Mittel zum Reinitialisieren der Empfangstaktlogik der Slave-Schaltung (1c) und zum Senden zweier fiktiver Nachrichten in Empfangspuffer des Ports (10c) der Slave-Schaltung (1c);
Mittel zum Einstellen eines Eingangs eines Ports (10c) der Slave-Schaltung (1c) aufden Wert 1; und
Mittel zum Senden von Null-Zeichen während einer ausreichenden Dauer, die durch ein periodisches Abtastsignal des Slave-Ports (10c) bestimmt ist, und zum Validieren eines periodischen Rekalibrierungssignals des Slave-Ports (10c).

18. Vorrichtung nach Anspruch 16, **dadurch gekennzeichnet, daß** sie umfaßt:
Mittel zum Kalibrieren des Empfangstakts (CKR) des Ports (10a) der Master-Schaltung (1a) und zum Einstellen eines Kalbrierungssignals dieses Ports (10a) auf den Pegel 1;
Mittel, die zu dem dieser Master-Schaltung (1a) zugeordneten Mikroprozessor (11a) eine Unterbrechung schicken;
Mittel zum Reinitialisieren der Empfangstaktlogik (CKR) des Ports (10a) dieser Master-Schaltung (1a) und zum Laden zweier fiktiver Nachrichten in Empfangspuffer (RCBUF) der Master-Schaltung (1a).

19. Vorrichtung nach Anspruch 17, **dadurch gekennzeichnet, daß** sie umfaßt:
Mittel zum Verbinden eines parallelen Busses eines dieser Master-Schaltung (1a) zugeordneten Mikroprozessors (11a) mit dem Port (10a) dieser Master-Schaltung (1a);
Mittel zum Lesen fiktiver Nachrichten, die vorher gesendet worden sind, und zum Schicken zweier Jeton-Bits eines Bitzählers der Master-Schaltung (1a) zum Port (10c) der Slave-Schaltung (1c);
Mittel zum Empfangen der zwei Jeton-Bits durch die Slave-Schaltung (1c); und
Mittel, die bewirken, daß die Slave-Schaltung (1c) eine Unterbrechung zum zugeordneten Mikroprozessor (11c) sendet;
Mittel zum Verbinden paralleler Busse, die mit dem der Slave-Schaltung (1c) zugeordneten Mikroprozessor (11c) verbunden sind;
Mittel zum Lesen fiktiver Nachrichten; und
Mittel zum Schicken zweier Jeton-Bits zur Master-Schaltung (1a).

20. Vorrichtung nach dem vorhergehenden Anspruch, **dadurch gekennzeichnet, daß** Mittel Jeton-Bits durch eine Operation des Lesens fiktiver Nachrichten, die in den Empfangspuffern (RCBUF) des Master-Ports (10a) bzw. des Slave-Ports (10c) gespeichert sind, erzeugen.

21. Vorrichtung nach einem der Ansprüche 12 bis 20, **dadurch gekennzeichnet, daß** Mittel für die Erfassung eines Kalibrierungsverlusts an dem einen oder dem anderen der Ports oder eines Reinitialisierungsbefehls für die Verbindung Mittel zum Isolieren der Empfangstaktlogik; Mittel zum Deaktivieren eines Signals, das für die Schaltung, die den Kalibrierungsverlust erfaßt hat, die Unterbrechung des Sendens von Daten zu der entfernten Empfangsschaltung zur Folge hat; Mittel zum Erfassen des Kalibrierungsverlusts durch den Port der entfernten Empfangsschaltung; und Mittel zum Starten einer Prozedur zum Trennen der Empfangstaktlogik von dieser letzteren Schaltung starten.
